# EUROPÄISCHE PATENTANMELDUNG

(11) **EP 2 359 676 A1**
(43) Veröffentlichungstag der Anmeldung: **24.08.2011**
(21) Anmeldenummer: 10177519.5
(22) Anmeldetag: 20.09.2010
(51) Int. Cl.: A01D 43/08, A01D 69/02

(54) **Landwirtschaftliche Arbeitsmaschine**

(30) Priorität: 12.02.2010 DE 102010007930
(71) Anmelder: CLAAS Industrietechnik GmbH, 33106 Paderborn (DE)
(72) Erfinder: Mörsch, Claus, 33449 Langenberg (DE); Beine, Rainer, 33129, Delbrück (DE); Baranski, Michael, 33184, Altenbeken OT. Schwaney (DE)

(57) **Zusammenfassung**

Eine landwirtschaftliche Arbeitsmaschine (1) weist einen Hauptmotor (2), einen zuschaltbaren Hilfsmotor (20; 25), wenigstens einen ersten Verbraucher (5), einen sich vom Hauptmotor (2) zum ersten Verbraucher (5) erstreckenden Antriebsstrang (12, 17) und ein zwischen einem hauptmotorseitigen (12) und einem verbraucherseitigen Abschnitt (17) des Antriebsstrangs (12, 17) angeordnetes Getriebe (13) auf. Der Hilfsmotor (20; 25) greift getrennt von dem Getriebe (13) an dem verbraucherseitigen Abschnitt (17) des Antriebsstrangs (12, 17) an.

## Beschreibung

Die vorliegende Erfindung betrifft eine landwirtschaftliche Arbeitsmaschine mit einem Hauptmotor, wenigstens einem ersten von diesem Hauptmotor angetriebenen Verbraucher und einen Hilfsmotor, der im Bedarfsfall zuschaltbar ist. Eine solche Arbeitsmaschine ist aus DE 2004 007 837 Al bekannt.

Bei dieser bekannten Arbeitsmaschine ist in einem Antriebsstrang, der den Hauptmotor mit dem Verbraucher verbindet, ein Summengetriebe angeordnet, welches die Drehmomente des Hauptmotors und des Hilfsmotors zusammenführt und gemeinsam in ein Verteilgetriebe einspeist, welches das verfügbare Antriebsmoment auf eine Mehrzahl von Verbrauchern verteilt. Dadurch ist es möglich, den Verbraucher wenigstens zeitweilig mit einer höheren als der vom Hauptmotor bereitgestellten Antriebsleistung zu versorgen. Summen- und Verteilgetriebe müssen daher dimensioniert sein, um dem kumulierten Drehmoment von Haupt- und Hilfsmotor standzuhalten und sind dementsprechend groß, massiv und kostspielig. Au-βerdem sind Summen- und Verteilgetriebe sämtlichen Lastwechseln ausgesetzt, die im Betrieb der Arbeitsmaschine auftreten, und dadurch stark verschleißgefährdet.

Es besteht daher Bedarf nach einer landwirtschaftlichen Arbeitsmaschine mit einem zuschaltbaren Hilfsmotor, bei der die Anforderungen an die Drehmomentbelastbarkeit eines Getriebes und dessen Verschleißneigung reduziert sind.

Die Aufgabe wird gelöst, indem bei einer landwirtschaftlichen Arbeitsmaschine mit einem Hauptmotor, einem zuschaltbaren Hilfsmotor, wenigstens einem ersten Verbraucher, einem sich vom Hauptmotor zum ersten Verbraucher erstreckenden Antriebsstrang und einem zwischen einem hauptmotorseitigen und einem verbraucherseitigen Abschnitt des Antriebsstrangs angeordneten Getriebe der Hilfsmotor getrennt von dem Getriebe an dem verbraucherseitigen Abschnitt des Antriebsstrangs angreift. Bei einer derart aufgebauten Arbeitsmaschine ist das Getriebe stets nur dem Drehmoment des Hauptmotors ausgesetzt; ein vom Hilfsmotor ausgeübtes, den Hauptmotor unterstützendes Drehmoment erhöht nicht die Drehmomentbelastung des Getriebes. Das Getriebe braucht daher nicht für das kumulierte Drehmoment beider Motoren ausgelegt zu sein, was eine kompakte, kostengünstig zu fertigende Bauform und verlustarmen Betrieb ermöglicht. Da Drehmomentspitzen durch den Hilfsmotor verbraucherseitig vom Getriebe in den Antriebsstrang eingespeist werden, kann das Getriebe mit einer gleichmäßigen, wenig verschleißträchtigen Drehmomentbelastung gefahren werden.

Einer ersten Ausgestaltung der Erfindung zufolge kann der Hilfsmotor ein Elektromotor sein.

Zur Speisung des Elektromotors dient zweckmäßigerweise eine Batterie, die ihrerseits durch einen vom Hauptmotor angetriebenen Generator aufladbar ist. So kann zu Zeiten, zu denen der Hauptmotor wenig belastet ist, ein Teil von dessen Leistung zum Laden der Batterie verwendet werden. Auf diese Weise kann, obwohl der Hauptmotor die einzige primäre Quelle von Antriebsenergie der Arbeitsmaschine darstellt, zu Spitzenzeiten deutlich mehr Antriebsleistung bereitgestellt werden, als der Hauptmotor alleine zu liefern vermag.

Zweckmäßigerweise ist der Elektromotor auch als zweiter Generator zum Laden der Batterie betreibbar. Dies ermöglicht es insbesondere, die Maschine mit Hilfe des als Generator betriebenen Elektromotors abzubremsen und dadurch kinetische Energie der Arbeitsmaschine zurückzugewinnen.

Als Hilfsmotor kommt einer zweiten Ausgestaltung zufolge auch ein Hydraulikmotor in Betracht.

Der Hydraulikmotor kann über eine Pumpe vom Hauptmotor angetrieben sein, wobei die Pumpe vorzugsweise getrennt von dem Getriebe am hauptmotorseitigen Abschnitt des Antriebsstrangs angreift. So wird das Getriebe von dem zum Antreiben der Pumpe benötigten Drehmoment entlastet.

Zwar kann bei dieser zweiten Ausgestaltung den Verbrauchern nicht mehr Leistung zur Verfügung gestellt werden, als der Hauptmotor liefert, doch wirkt sich die Drehmomententlastung des Getriebes insbesondere bei niedrigen Fahrgeschwindigkeiten der Arbeitsmaschine vorteilhaft aus. Wenn nämlich zum langsamen Fahren ein niedriges Übersetzungsverhältnis im Getriebe eingestellt ist, können am Ausgang des Getriebes umgekehrt proportional zum Übersetzungsverhältnis hohe Drehmomente auftreten. Dies macht es herkömmlicherweise vielfach erforderlich, das Drehmoment des Hauptmotors - und damit dessen Leistung - bei langsamer Fahrt zu begrenzen, um Getriebeschäden zu vermeiden. Eine solche Begrenzung kann entfallen oder wenigstens großzügiger ausgelegt werden, wenn Drehmoment des Hauptmotors, welches das Getriebe überlasten würde, mit Hilfe der des Hilfsmotors und seines Energieversorgers - egal, ob es sich dabei um den Elektromotor und den Generator oder um den Hydraulikmotor und die Pumpe handelt - am Getriebe vorbeigeführt wird.

Speziell zum Schutz des Getriebes vor Drehmoment-überlastung sollte das Zuschalten des Hilfsmotor bei niedriger Fahrgeschwindigkeit der Arbeitsmaschine, insbesondere unterhalb von 20 km/h, möglich sein. Als Kriterium für die Entscheidung, ob der Hilfsmotor zugeschaltet werden muss oder nicht, kann insbesondere das Übersetzungsverhältnis des Getriebes herangezogen werden.

Der Hilfsmotor kann über eine Kupplung mit dem verbraucherseitigen Abschnitt des Antriebsstrangs verbindbar sein. Dies erlaubt es, den Hilfsmotor bei Nichtgebrauch durch Öffnen der Kupplung stillzulegen und dadurch Reibungsverluste zu reduzieren. Die Tatsache, dass kein den Hilfsmotor antreibendes Schleppmoment durch das Getriebe hindurch übertragen werden muss, trägt auch zur Entlastung des Getriebes bei.

Einer einfacheren Ausgestaltung zufolge kann der Hilfsmotor permanent mitlaufend mit dem verbraucherseitigen Abschnitt des Antriebsstrangs verbunden sein. Durch den Wegfall der Kupplung können Kosten, Platz und Gewicht gespart werden.

Bei dem ersten Verbraucher handelt es sich vorzugsweise um ein Fahrwerk der Arbeitsmaschine. Weitere Verbraucher können beispielsweise Werkzeuge zum Aufnehmen, Zerkleinern oder anderweitigem Verarbeiten von Erntegut sein. Bei dem Getriebe kann es sich sowohl um ein Verteilgetriebe, das Drehmoment des Hauptmotors an den ersten und wenigstens einen zweiten Verbraucher verteilt, als auch um ein Übersetzungsgetriebe, insbesondere mit stufenlos veränderbarer Übersetzung (CVT), handeln.

Weitere Merkmale und Vorteile der Erfindung ergeben sich aus der nachfolgenden Beschreibung von Ausführungsbeispielen unter Bezugnahme auf die beigefügten Figuren. Es zeigen:
Fig. 1 eine schematische Darstellung eines selbstfahrenden Feldhäckslers gemäß der vorliegenden Erfindung;
Fig. 2 ein Blockdiagramm des Antriebssystems des Feldhäckslers gemäß einer ersten Ausgestaltung;
Fig. 3 ein Blockdiagramm des Antriebssystems gemäß einer zweiten Ausgestaltung;
Fig. 4 ein Blockdiagramm des Antriebssystems gemäß einer dritten Ausgestaltung und;
Fig. 5 ein Blockdiagramm des Antriebssystems gemäß einer vierten Ausgestaltung.

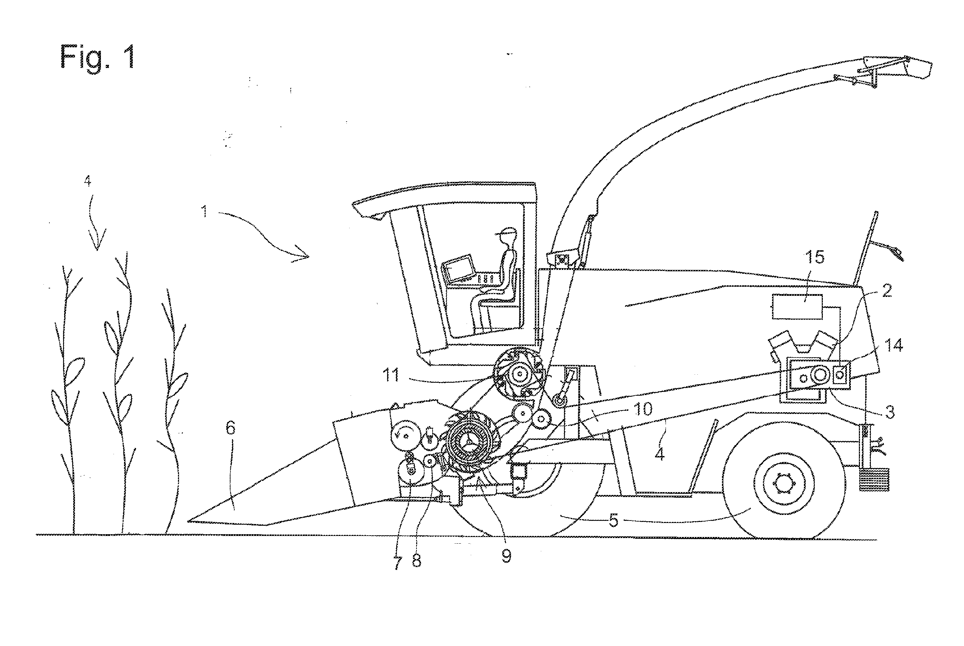

Fig. 1 zeigt einen selbstfahrenden Feldhäcksler 1 in einer schematischen Seitenansicht. Ein Dieselmotor 2 ist im Heckbereich des Feldhäckslers untergebracht. Ein Getriebe 3 verteilt das Drehmoment des Motors 2 auf ein Fahrwerk mit Rädern 5 und, mit Hilfe eines Riemens 4, an diverse der Verarbeitung von aufgenommenem Erntegut dienende Verbraucher, die in einem vorderen Bereich des Feldhäckslers angeordnet sind. Zu den diversen Verbrauchern gehören ein austauschbar montiertes Vorsatzgerät, hier ein Maisgebiss 6, Paare von Walzen 7, 8 zum Fördern und Verdichten des geschnittenen Ernteguts, eine Häckseltrommel 9, Konditionierwalzen 10 und ein Nachbeschleuniger 11. Da die Funktionen dieser einzelnen Verbraucher dem Fachmann vertraut sind, braucht hier nicht weiter darauf eingegangen zu werden.

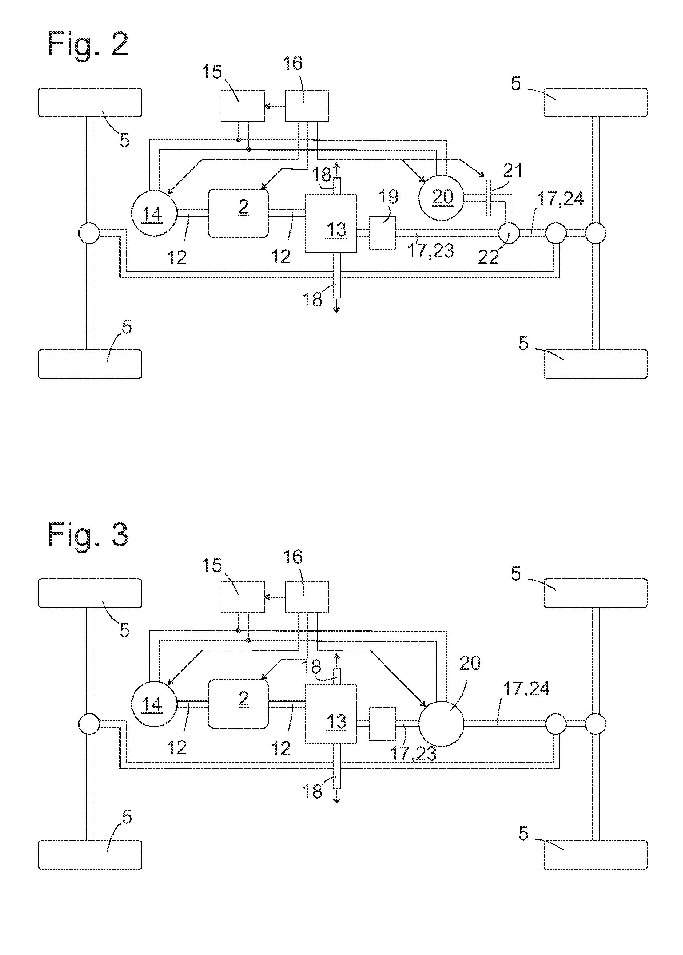

Fig. 2 zeigt ein Blockdiagramm des Antriebssystems des Feldhäckslers 1 gemäß einer ersten Ausgestaltung. Eine Kurbelwelle 12 des Dieselmotors 2 treibt einerseits ein Getriebe 13 und andererseits eine Lichtmaschine 14 an. Die Lichtmaschine 14 lädt eine Batterie 15. Eine elektronische Laststeuereinheit 16 steuert die Leistung der Lichtmaschine 14.

Das Getriebe 13 ist als Verteilgetriebe ausgelegt, mit mehreren Antriebswellen 17, 18, die verschiedene Verbraucher mit Drehmoment vom Motor versorgen. Der einzige in der Figur dargestellte Verbraucher ist das über die Welle 17 versorgte Fahrwerk des Fahrzeugs.

Eine Feststellbremse 19 zum sicheren Parken des Feldhäckslers 1 greift an der Abtriebswelle 17 an. Ein von der Batterie 15 gespeister Elektromotor 20 ist über eine Kupplung 21 an die Abtriebswelle 17 anschaltbar. Eine Anbindung 22 des Elektromotors 20 umfasst z.B. ein auf der Abtriebswelle 17 drehfestes Rad sowie ein auf einer Welle des Elektromotors 20 angeordnetes und mittels der Kupplung 21 an diese Welle koppelbares Rad, das mit dem Rad der Abtriebswelle 17 kämmt oder mit ihm über eine Kette oder einen Riemen verbunden ist. Die Anbindung 22 gliedert die Abtriebswelle in einen getriebeseitigen Abschnitt 23 und einen fahrwerkseitigen Abschnitt 24.

Der Dieselmotor 2, die Kupplung 21 sowie der Elektromotor 20 sind durch die Laststeuereinheit 16 gesteuert; diese schaltet im Bedarfsfall den Elektromotor 20 zu und schließt die Kupplung 21. Durch die Unterstützung des Elektromotors 20 kann das Fahrwerk mit einem deutlich höheren Drehmoment beaufschlagt werden, als es der Motor 2 allein zu liefern vermöchte oder mit Rücksicht auf die Belastbarkeit des Getriebes 13 allein liefern dürfte. Da der Elektromotor 20 im Antriebsstrang erst hinter dem Getriebe 13 angreift, ist das Getriebe 13 durch das zusätzliche Drehmoment des Elektromotors 20 nicht belastet. Nur der fahrwerkseitige Abschnitt 24 der Abtriebswelle 17 ist dem kumulierten Drehmoment beider Motoren 2, 20 ausgesetzt. Daher kann der Elektromotor 20 auch dann zugeschaltet werden, wenn das Getriebe 13 bereits an seiner Lastgrenze arbeitet, insbesondere wenn das Getriebe 3 mit einer niedrigen Übersetzung und einer dementsprechend hohen Drehmomentverstärkung arbeitet. Daher erlaubt der in Fig. 2 gezeigte Aufbau des Antriebssystems ein Zuschalten des Elektromotors 20 auch bei sehr niedriger Fahrtgeschwindigkeit.

Die Entscheidung, ob der Elektromotor 20 zugeschaltet wird oder nicht, trifft die Laststeuereinheit 16 einerseits anhand der von einem Fahrer der Maschine verlangten Leistung und andererseits anhand der der Drehzahl des Motors 2 und der Übersetzung des Getriebes 13. Würde der Motor 2 die verlangte Leistung allein liefern, so müsste er dafür ein Drehmoment an der Kurbelwelle 12 liefern, das dem Quotienten von Leistung und Drehzahl entspricht. Das Drehmoment auf den Abtriebswellen wäre demgegenüber umgekehrt proportional zum Übersetzungsverhältnis des Getriebes verstärkt. Überschreitet das so abgeschätzte Drehmoment auf den Abtriebswellen die Belastbarkeit des Getriebes, dann reduziert die Laststeuereinheit 16 die Leistung des Motors 2 so weit, dass die Belastbarkeit des Getriebes 13 nicht mehr überschritten ist, und steuert den Elektromotor 20 so, dass dieser die dann fehlende Leistung beiträgt.

Wenn der Feldhäcksler 1 mit einer niedrigeren Last läuft, die kein Zuschalten des Elektromotors 20 erfordert, kann letzterer bei der Ausgestaltung der Fig. 1 komplett stillstehen. Er verursacht daher, solange er nicht genutzt wird, keinerlei Verluste.

Einer vereinfachten Ausgestaltung zufolge, die in Fig. 3 in einem zu Fig. 2 analogen Blockdiagramm dargestellt ist, ist die Kupplung 21 entfallen, und stattdessen ist der Elektromotor 20 unmittelbar auf der Abtriebswelle 17 angeordnet, d.h. sein Anker ist an der Abtriebswelle 17 drehfest montiert. Hier ist es somit der Elektromotor 20 selbst, der die Abtriebswelle 17 in einen bezogen auf den Drehmomentfluss vom Dieselmotor 2 stromaufwärtigen Abschnitt 23 und einen stromabwärtigen Abschnitt 24 teilt, von denen lediglich der stromabwärtige Abschnitt 24 dem kumulierten Drehmoment beider Motoren 2, 20 ausgesetzt ist.

Bei beiden Ausgestaltungen ermöglicht die Tatsache, dass die Laststeuereinheit 16 den Elektromotor 20 jeweils nur bei Lastspitzen zuschaltet, einen kontinuierlichen, von strapazierenden Lastspitzen freien Betrieb des Getriebes 13, was für die Haltbarkeit sowohl des Getriebes 13 als auch des Dieselmotors 2 vorteilhaft ist.

Die Laststeuereinheit 16 kann ferner eingerichtet sein, um den Elektromotor 20 als einen zweiten Generator zum Aufladen der Batterie 15 zu nutzen. Dies ist insbesondere zu Zeiten zweckmäßig, in denen der Dieselmotor 2 als Motorbremse genutzt wird. Hier ist die Ausgestaltung der Fig. 3 insofern vorteilhaft, als sie einen instantanen Übergang des Motors 20 in den Generatorbetrieb, ohne Verzögerung durch ein zuvor eventuell erforderliches Schließen der Kupplung, ermöglicht.

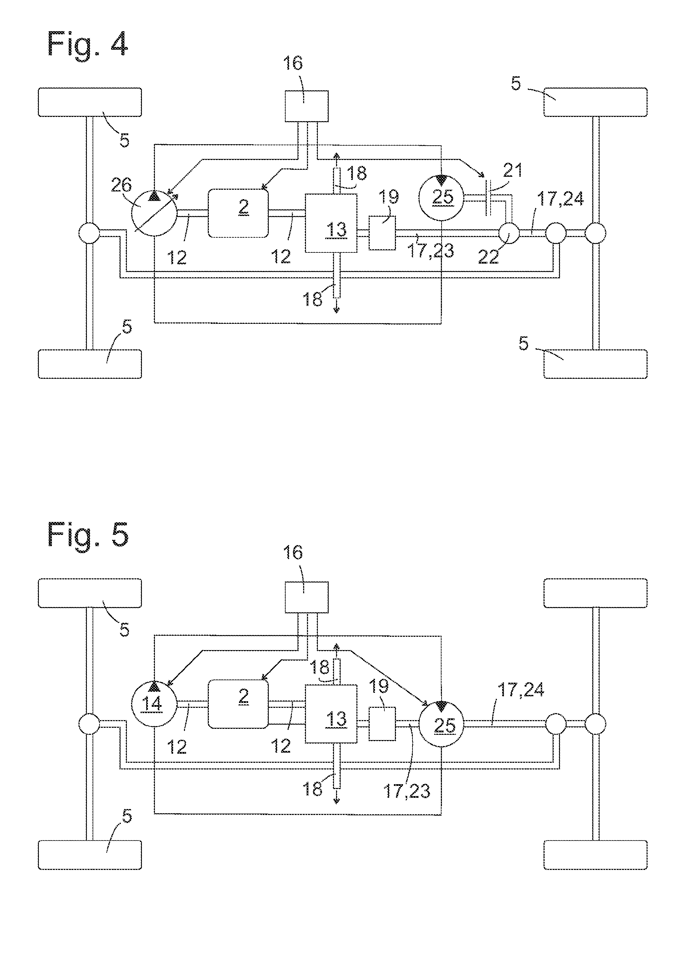

Die Ausgestaltung der Fig. 4 unterscheidet sich von derjenigen der Fig. 2 dadurch, dass der Elektromotor 20 durch einen Hydraulikmotor 25 ersetzt ist, der über eine anstelle oder zusätzlich zu der Lichtmaschine 14 an der Kurbelwelle 12 angeordnete Pumpe 26 antreibbar ist. Die Laststeuereinheit 16 steuert den Hydraulikmotor 25 - nach denselben Kriterien wie oben für den Elektromotor 20 beschrieben - indirekt über die veränderbare Förderrate der Pumpe 26. Wenn der Hydraulikmotor 25 nicht genutzt wird, ist diese Förderrate auf Null gesetzt.

Anders als beim Elektromotor 20, der auf in der Batterie 15 gespeicherte Energie zurückgreifen kann, ist es mit dem Hydraulikmotor 25 nicht möglich, zeitweilig mehr Antriebsleistung an die diversen Verbraucher zu liefern, als der Dieselmotor 2 abgibt. Dennoch erlaubt es die Konstruktion der Fig. 4, die Leistungsfähigkeit des Dieselmotors 2 besser auszunutzen, insbesondere beim Fahren mit niedriger Geschwindigkeit und hoher Last. Um bei niedriger Fahrgeschwindigkeit eine hohe Leistung erbringen zu können, muss der Dieselmotor 2 hochtourig laufen, und dementsprechend niedrig muss die Übersetzung zwischen Kurbelwelle 12 und Abtriebswelle 17 im Getriebe 13 sein. Aufgrund des niedrigen Übersetzungsverhältnisses können hohe Drehmomente im Getriebe 13 auftreten. Würde die gesamte Leistung des Motors über das Getriebe 13 übertragen, so müsste das Getriebe 13 entweder belastbar genug sein, um auch die beim niedrigsten möglichen Übersetzungsverhältnis auftretenden Drehmomente auszuhalten, oder die Leistung des Motors 2 müsste bei Langsamfahrt wie oben für den Fall des Elektromotors 20 beschrieben begrenzt werden, um eine Beschädigung des Getriebes 13 zu verhindern. Mit der vorliegenden Konstruktion hingegen kann ein Teil des vom Motor 2 gelieferten Drehmoments von der Pumpe 26 abgegriffen werden, so dass der vom Getriebe 13 übertragene Anteil des Drehmoments dessen Belastbarkeit nicht überschreitet. Mit Hilfe des Hydraulikmotors 25 und der Kupplung 21 wird dieses abgeschöpfte Drehmoment stromabwärts vom Getriebe 13 in den Antriebsstrang zurückgekoppelt.

Auch diese Ausgestaltung kann in zu Fig. 3 analoger Weise modifiziert werden, indem der Hydraulikmotor 25 unmittelbar auf der Abtriebswelle 17 angeordnet ist. Ein solcher Hydraulikmotor 25 kann insbesondere eine fest auf der Abtriebswelle 17 montierte Taumelscheibe und rings um die Abtriebswelle 17 ortsfest montierte, mit der Taumelscheibe wechselwirkende Hydraulikzylinder aufweisen.

Bei den oben betrachteten Ausgestaltungen ist der Hilfsmotor 20 bzw. 25 stets an der zum Fahrwerk führenden Abtriebswelle 17 angeordnet. Grundsätzlich könnte ein solcher Hilfsmotor stattdessen auch an jeder anderen Abtriebswelle 18 angeordnet sein; je mehr des vom Fahrwerk benötigten Drehmoments der Hilfsmotor bereitstellt, umso weniger muss durch das Getriebe 13 geliefert werden, und dementsprechend größer ist der Anteil des Drehmoments, der für die anderen an das Getriebe 13 angeschlossenen Verbraucher zur Verfügung steht. Auch wenn der Hilfsmotor an einer der Abtriebswellen 18 angreift, kann dem Fahrwerk über die Abtriebswelle ein höheres Drehmoment zugeführt werden als bei einer Konstruktion ohne Hilfsmotor, denn der Anteil des vom Getriebe 13 übertragenen Drehmoments, der von dem vom Hilfsmotor unterstützten Verbraucher nicht benötigt wird, kann an die übrigen Verbraucher verteilt werden.

Die Erfindung wurde oben zwar nur mit Bezug auf einen Feldhäcksler erläutert, doch dürfte anhand der Erläuterungen unmittelbar einsichtig sein, dass sie auch auf andere Typen von landwirtschaftlichen Arbeitsmaschinen, insbesondere Traktoren und Mähdrescher, anwendbar ist.

### Bezugszeichen

- 1: Feldhäcksler
- 2: Dieselmotor
- 3: Getriebe
- 4: Riemen
- 5: Rad
- 6: Maisgebiss
- 7: Walze
- 8: Walze
- 9: Häckseltrommel
- 10: Konditionierwalzen
- 11: Nachbeschleuniger
- 12: Kurbelwelle
- 13: Getriebe
- 14: Lichtmaschine
- 15: Batterie
- 16: Laststeuereinheit
- 17: Abtriebswelle
- 18: Abtriebswelle
- 19: Feststellbremse
- 20: Elektromotor
- 21: Kupplung
- 22: Anbindung
- 23: Abschnitt
- 24: Abschnitt
- 25: Hydraulikmotor
- 26: Pumpe

## Patentansprüche

1. Landwirtschaftliche Arbeitsmaschine (1) mit einem Hauptmotor (2), einem zuschaltbaren Hilfsmotor (20; 25), wenigstens einem ersten Verbraucher (5), einem sich vom Hauptmotor (2) zum ersten Verbraucher (5) erstreckenden Antriebsstrang (12, 17) und einem zwischen einem hauptmotorseitigen (12) und einem verbraucherseitigen Abschnitt (17) des Antriebsstrangs (12, 17) angeordneten Getriebe (13), **dadurch gekennzeichnet, dass** der Hilfsmotor (20; 25) getrennt von dem Getriebe (13) an dem verbraucherseitigen Abschnitt (17) des Antriebsstrangs (12, 17) angreift.

2. Arbeitsmaschine nach Anspruch 1, **dadurch gekennzeichnet, dass** der Hilfsmotor (20) ein Elektromotor ist.

3. Arbeitsmaschine nach Anspruch 2, **dadurch gekennzeichnet, dass** der Elektromotor (20) durch eine Batterie (15) gespeist ist, die durch einen vom Hauptmotor (2) angetriebenen Generator (14) aufladbar ist.

4. Arbeitsmaschine nach Anspruch 3, **dadurch gekennzeichnet, dass** der Elektromotor (20) als ein zweiter Generator zum Laden der Batterie (15) betreibbar ist.

5. Arbeitsmaschine nach Anspruch 1, **dadurch gekennzeichnet, dass** der Hilfsmotor ein Hydraulikmotor (25) ist.

6. Arbeitsmaschine nach Anspruch 5, **dadurch gekennzeichnet, dass** der Hydraulikmotor (25) über eine Pumpe (26) vom Hauptmotor (2) angetrieben ist, wobei die Pumpe (26) getrennt von dem Getriebe (13) am hauptmotorseitigen Abschnitt (12) des Antriebsstrangs (12, 17) angreift.

7. Arbeitsmaschine nach einem der vorhergehenden Ansprüche, **dadurch gekennzeichnet, dass** der Hilfsmotor (20; 25) bei einer Fahrtgeschwindigkeit der Arbeitsmaschine von weniger als 20 km/h zuschaltbar ist.

8. Arbeitsmaschine nach einem der vorhergehenden Ansprüche, **dadurch gekennzeichnet, dass** der Hilfsmotor (20; 25) über eine Kupplung (21) mit dem verbraucherseitigen Abschnitt (17) verbindbar ist.

9. Arbeitsmaschine nach einem der Ansprüche 1 bis 7, **dadurch gekennzeichnet, dass** der Hilfsmotor (20; 25) permanent mitlaufend mit dem verbraucherseitigen Abschnitt (17) verbunden ist.

10. Arbeitsmaschine nach einem der vorhergehenden Ansprüche, **dadurch gekennzeichnet, dass** eine Steuereinheit (16) eingerichtet ist, den Hilfsmotor (20; 25) zuzuschalten, wenn der Drehmomentbedarf des wenigstens einen Verbrauchers (5) einen Grenzwert überschreitet.

11. Arbeitsmaschine nach Anspruch 10, **dadurch gekennzeichnet, dass** der Grenzwert im Wesentlichen einer maximal zulässigen Drehmomentbelastung des Getriebes (13) entspricht.

12. Arbeitsmaschine nach einem der vorhergehenden Ansprüche, **dadurch gekennzeichnet, dass** der erste Verbraucher (5) ein Fahrwerk ist.

13. Arbeitsmaschine nach einem der vorhergehenden Ansprüche, **dadurch gekennzeichnet, dass** das Getriebe (13) ein Verteilgetriebe ist, das ferner einen zweiten Verbraucher (7; 8; 9; 10; 11) über einen zweiten verbraucherseitigen Abschnitt (18) antreibt.

14. Arbeitsmaschine nach einem der Ansprüche 1 bis 12, **dadurch gekennzeichnet, dass** das Getriebe (13) ein Getriebe mit veränderbarer, insbesondere stufenlos veränderbarer, Übersetzung ist.
